# EUROPÄISCHE PATENTSCHRIFT

(11) **EP 0 757 198 B1**
(45) Veröffentlichungstag und Bekanntmachung des Hinweises auf die Patenterteilung: **22.09.1999**
(21) Anmeldenummer: 95112016.1
(22) Anmeldetag: 31.07.1995
(51) Int. Cl.: F16K 11/07, F15B 13/042

(54) **Handsteuergerät für in Badewannen einsetzbare Liftgeräte**
Manual control lever for a bath lift
Levier de commande manuel pour un élévateur de bain

(43) Veröffentlichungstag der Anmeldung: 05.02.1997
(73) Patentinhaber: Schmidt & Lenhardt GmbH & Co. oHG, 88316 Isny (DE)
(72) Erfinder: Janisch, Klaus, D-88316 Isny (DE)
(74) Vertreter: Schneck, Herbert, Dipl.-Phys., Dr.

(56) Entgegenhaltungen:
- EP-A- 0 619 106
- FR-A- 2 164 406
- GB-A- 2 277 979
- US-A- 2 928 380

## Beschreibung

Die Erfindung betrifft ein Handsteuergerät zur Fernbetätigung einer hydraulisch betätigten Ventileinrichtung von in Badewannen einsetzbaren Liftgeräten, wobei das Handsteuergerät mittels eines Bündels Schlauchleitungen an die Ventileinrichtung angeschlossen ist, welches Druckwasserversorgungs-, Rücklauf- und Steuerleitungen umfaßt, und das Handsteuergerät ein längliches Gehäuse mit Bodenplatte und zwei stirnseitigen Enden aufweist und an einem Ende des Gehäuses ein, aus einer Neutralstellung in entgegengesetzten Richtungen jeweils in Funktionsstellungen schwenkbarer Handgriff aus dem Gehäuse deckseitig herausragt und am anderen Ende das Bündel Schlauchleitungen angeschlossen ist.

Ein derartiges Handsteuergerät ist aus der EP-A-0619106 bekannt. Im Gehäuse sind 4 senkrecht zur Bodenplatte geführte Ventilschieber angeordnet, die von einer Betätigungsglocke des Handhebels je nach dessen Schwenkstellung einzeln betätigt werden können. Jeder Ventilschieber ist in einer eigenen Bohrung eines Einsatzkörpers abdichtend gelagert und an eine Steuerleitung angeschlossen. Mit dem Handsteuergerät können somit durch hydraulische Fernbetätigung Arbeitsventile der Ventileinrichtung geöffnet und geschlossen werden, die ihrerseits unter der Hubplatte des Badelifters fest montiert ist. Die Arbeitsventile verbinden die hydraulische Hubvorrichtung des Badelifters mit der Druckwasserversorgung, um die Hubplatte anzuheben oder mit einer Entleerungsleitung, um die Platte abzusenken Ein weiteres Paar Arbeitsventile dient der Neigungsverstellung der Rückenlehne, für die eine hydraulische Betätigungseinrichtung am Badelifter vorgesehen ist. In vielen Anwendungsfällen kann eine hydraulische Rückenlehnenverstellung entfallen und z.B. durch eine mechanische Verstelleinrichtung ersetzt werden. Das Handsteuergerät würde dann lediglich zwei Steuerfunktionen ausführen. Dies ließe sich bei dem bekannten Gerät dadurch realisieren, daß zwei der vier Ventilschieber entfallen, jedoch wären die Bauweise aufwendig und der Bauumfang, insbesondere die Bauhöhe groß.

Aufgabe der Erfindung ist es daher, ein für zwei Steuerfunktionen geeignetes Handsteuergerät einfacher auszubilden und die Baugröße zu verringern.

Diese Aufgabe wird erfindungsgemäß dadurch gelöst, daß im Gehäuse ein länglicher bodenparalleler Einsatzkörper angeordnet ist, der eine bodenparallele Zentralbohrung sowie vier in Radialabständen parallel zu dieser vorzugsweise umfangsverteilte Längsbohrungen aufweist, deren eine als Versorgungsbohrung an die Druckwasserleitung, eine weitere als Rückführbohrung an die Rücklaufleitung und deren restliche beiden Längsbohrungen als Steuerbohrungen jeweils an eine der Steuerleitungen angeschlossen sind, daß in der Zentralbohrung ein Ventilschieber mit in Längsabständen an ihm vorgesehenen Kolben längsverschiebbar gelagert ist, daß der Handgriff an einem oberen Arm eines aufrechten zweiarmigen Hebels angeordnet ist, dessen unterer Arm sich von einem Hebelschwenklager abwärts erstreckt und mit einem, aus dem Einsatzkörper herausragenden Ende des Ventilschiebers derart gelenkig verbunden ist, daß beim Verschwenken des Handgriffes aus der Neutralstellung heraus der Ventilschieber axial verschoben wird, daß die Kolben Dichtringe aufweisen, welche in der Zentralbohrung zwei, durch einen axialen Distanzbereich voneinander distanzierte Ringkammern begrenzen, daß der Ventilschieber in der Neutralstellung des Handhebels eine Mittelstellung einnimmt, in der die Versorgungsbohrung über eine Querbohrung in dem Distanzbereich zwischen den beiden Ringkammern mündet und beide Ringkammern je über weitere Querbohrungen mit der Rückführbohrung und einer der Steuerbohrungen kommunizieren, wobei die Steuerleitungs-Querbohrungen an den, dem Distanzbereich zugewandten Enden und die Rückführ-Querbohrungen an den jeweils gegenüberliegenden Enden der Ringkammern münden und daß in jeder der Funktionsstellungen des Handhebels der Ventilschieber soweit aus der Mittelstellung verschoben ist, daß eine Ringkammer die Querbohrungen der Versorgungsbohrung und einer der Steuerbohrungen verbindet, die zugehörige Rückführ-Querbohrung jedoch außerhalb dieser Ringkammer liegt.

Das erfindungsgemäße Steuergerät ist unvergleichlich einfacher als dasjenige nach dem Stand der Technik, da nur ein einziger liegender Ventilschieber benötigt wird. Dieser ist in einer Zentralbohrung geführt, um die herum die Längsbohrungen vorzugsweise in Form von Sacklöchern angeordnet sind, die nur einen Durchmesser von ca. 4 mm oder weniger benötigen, sodaß das Handsteuergerät in Flachbauweise hergestellt werden kann. Obwohl in einem Ausführungsbeispiel die Längsbohrungen über und unter der Zentralbohrung sowie seitlich davon angeordnet sind, so versteht sich, daß dies nicht zwingend ist, denn die Bauhöhe ließe sich weiter verringern, wenn je zwei Längsbohrungen beidseitig der Zentralbohrung etwa auf gleicher Höhe mit dieser angeordnet werden. Statt der Längs- und Querbohrungen können im Rahmen der Erfindung auch entsprechende Kanäle anderen Querschnitts verwendet werden, wobei sich anbietet, den Einsatzkörper in zwei Hälften zu fertigen, wobei die Trennebene der beiden Hälften die Mittelebene für die Längs- und Querkanäle bildet.

Eine wichtige Weiterbildung der Erfindung besteht darin, daß in der Zentralbohrung zwei Endkammern gebildet sind, in denen je eine Druckfeder angeordnet ist, welche sich stirnseitig am Einsatzkörper und am Ventilschieber abstützt, und daß die Druckfedern den Ventilschieber bei Freigabe des Handgriffes selbsttätig in seine Mittelstellung verschieben.

Auch ist noch eine Ausgestaltung der Erfindung darin zu sehen, daß der Einsatzkörper eine stirnseitige ebene Kupplungsfläche aufweist, in der die Längsbohrungen rechtwinklig münden, daß ein Kupplungsstecker eine Platte mit von dieser rechtwinklig vorstehenden Hohlzapfen aufweist, denen auf der gegenüberliegenden Plattenseite je ein Schlauchanschlußnippel zugeordnet ist, auf dem eine der Schlauchleitungen befestigt ist, daß die Platte des Kupplungssteckers unter Zwischenlage einer mit Löchern für die Hohlzapfen versehenen Dichtscheibe an der Kupplungsfläche anliegt, wobei die Hohlzapfen in die Längsbohrungen des Einsatzkörpers eingreifen und daß eine Abschlußhülse auf den Einsatzkörper aufgeschraubt ist und mittels einer inneren Ringschulter die Platte des Kupplungsstecker gegen die Kupplungsfläche des Einsatzkörpers drückt. Durch diese Ausgestaltung wird eine leichte Montage und Demontage ermöglicht.

Anhand der Zeichnung, die ein Ausführungsbeispiel darstellt, wird die Erfindung näher beschrieben.

Es zeigt:

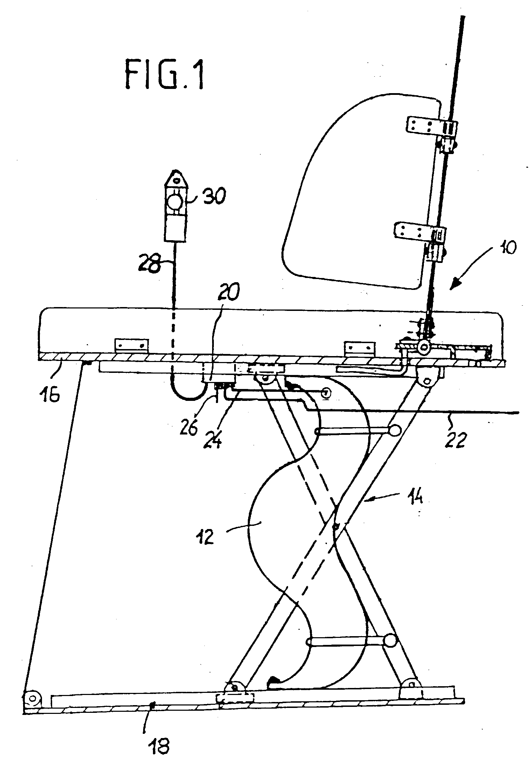

- FIG. 1: eine Seitenansicht eines Badelifters,
- FIG. 2: eine Schnittansicht durch ein Handsteuergerät zur hydraulischen Fernbetätigung einer Ventileinrichtung des Badelifters gemäß Figur 1, und

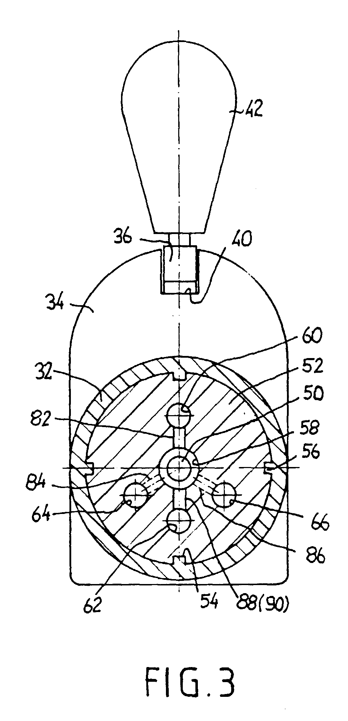

- FIG. 3: eine radiale Schnittansicht durch das Handsteuergerät längs der Linie 3-3 der Figur 2.

Ein Badelifter 10 umfaßt eine Hubplatte 16, die von einem Führungsgestell 14 auf einem Bodenrahmen 18 abgestützt ist und von einem Hubschlauch 12 angehoben und abgesenkt werden kann. Letzterer ist über eine Schlauchleitung 24 an eine, unter der Hubplatte 16 befestigte Ventileinrichtung 20 angeschlossen, die mit einer Druckwasserversorgungsleitung 22 verbunden ist und eine Ablaufleitung 26 aufweist. An die Ventileinrichtung 20 ist über einen flexiblen Spiralschlauch 28 ein Handsteuergerät 30 angeschlossen, mit dem Arbeitsventile in der Ventileinrichtung 20 hydraulisch angesteuert werden können, um die Hubplatte 16 auf- oder abwärts zu fahren.

Das Handsteuergerät 30 weist ein im wesentlichen zylindrisches Gehäuse 32 mit einstückig angeformtem domartigen Fortsatz 34 auf, in welchem ein zweiarmiger Hebel 36 um eine Querachse 38 schwenkbar gelagert ist. Ein oberer Arm des Hebels 36 durchsetzt einen Führungsschlitz 40 in der Kuppel des Fortsatzes 34 und trägt einen Handgriff 42. Der untere Arm des Hebels 36 ist gegabelt. Zwischen den beiden Gabelzinken ist ein Querbolzen 44 aufgenommen, der in einer horizontal liegenden Gabel 46 gehaltert ist, die ihrerseits mit der Kolbenstange 48 eines Ventilschiebers 50 verschraubt ist. In das zylindrische Gehäuse 32 ist von der offenen Rückseite her ein Einsatzkörper 52 eingeschoben, der vier Längsnuten 54 aufweist, in welche Längsstege 56 des Gehäuses 32 eingreifen. Der Einsatzkörper 52 ist damit im Gehäuse 32 unverdrehbar gehalten.

Im Einsatzkörper 52 befindet sich eine koaxiale Zentralbohrung 58, um die herum achsparallele Längsbohrungen, nämlich eine Druckwasserversorgungsbohrung 60, eine Rücklauf- oder Rückführbohrung 62 und zwei Steuerbohrungen 64, 66 in Umfangsabständen angeordnet sind.

Der Ventilschieber 50 weist vier Kolben 68, 70, 72, 74 auf, die je mit einem Dichtungsring in der Zentralbohrung 58 abdichtend geführt sind. Die beiden inneren Kolben 72, 74 haben einen Abstand voneinander, der kleiner ist als derjenige zwischen einem Außenkolben 68 und dem nächstliegenden Innenkolben 72. Zwischen den Kolbenpaaren 68, 72 und 70, 74 wird jeweils eine Ringkammer 76 bzw. 78 gebildet. In dem zwischen den beiden inneren Kolben 72, 74 gebildeten Distanzbereich wird eine weitere mittlere Ringkammer 80 gebildet.

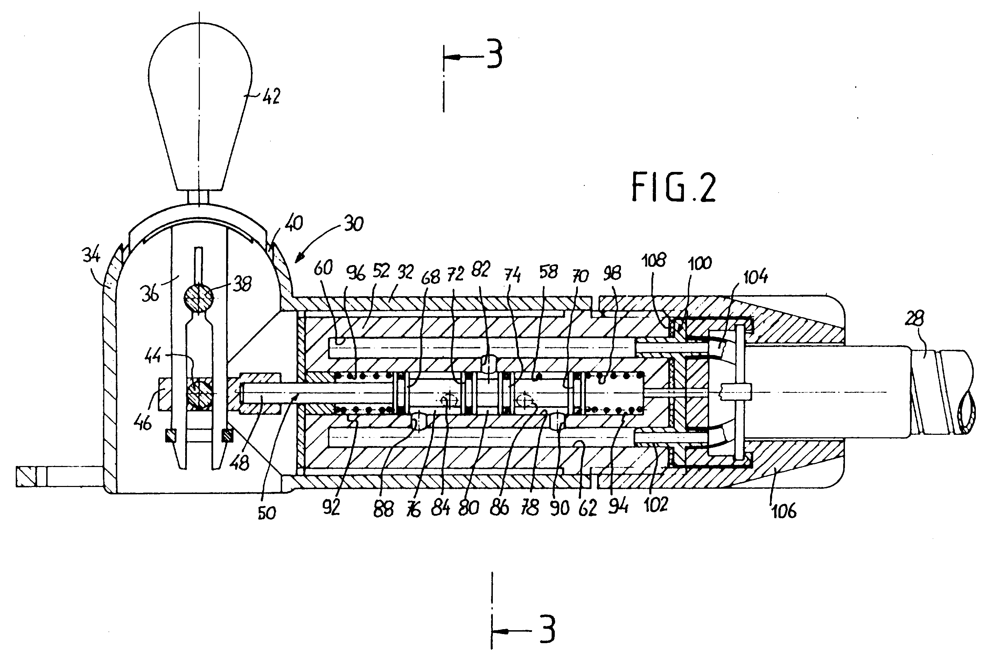

Figur 2 zeigt den Ventilschieber 50 in seiner Mittelstellung, die einer lotrechten Stellung des Handhebels 36 entspricht. In dieser Mittelstellung kommuniziert die Druckwasserversorgungsbohrung 60 über eine Querbohrung 82 mit der mittleren Ringkammer 80. Die Ringkammern 76, 78 kommunizieren ebenfalls über Querbohrungen 84, 86 mit jeweils einer der beiden Steuerbohrungen 64, 66, wobei diese Querbohrungen 84, 86 in der Mittelstellung des Ventilschiebers 50 dicht benachbart des jeweiligen Innenkolbens 72 bzw. 74 liegen. In die Ringkammern 76, 78 münden weiterhin dicht benachbart der Außenkolben 68 bzw. 70, zwei Querbohrungen 88, 90, die an die Rückführbohrung 62 angeschlossen sind.

An die beiden Außenkolben 68, 70 schließen sich in der Zentralbohrung 58 Endkammern 92, 94 an, in denen gleich starke Druckfedern 96, 98 angeordnet sind, die den Ventilschieber 50 in seiner Mittelstellung halten bzw. in diese Stellung zurückführen, wenn der Handgriff 42 freigegeben ist.

Ein Kupplungsstecker 100 besteht aus einem plattenförmigen Bauteil, von dem Hohlzapfen 102 auf der Vorderseite angeformt sind, deren Dimensionen und Positionen so gewählt sind, daß sie mit den jeweiligen Dimensionen der Längsbohrungen 60-66 übereinstimmen. Die Hohlzapfen 102 setzen sich an der Rückseite des plattenförmigen Bauteils in Nippeln fort, auf denen dünne Schlauchleitungen 104 befestigt sind, die im Spiralschlauch 28 zur Ventileinrichtung 24 unterhalb der Hubplatte 16 des Badelifters 10 führen. Der Kupplungsstecker 100 wird mittels einer Endkappe 106 auf den Einsatzkörper 52 aufgeschraubt, wobei jeweils einer der Hohlzapfen 102 in eine der Längsbohrungen 60-66 eingesteckt sind. Die Endkappe 106 drückt den Kupplungsstecker 100 unter Zwischenlage einer Dichtungsscheibe 108, die Löcher für den Durchtritt der Hohlzapfen 102 aufweist, gegen eine ebene hintere Stirnfläche des Einsatzkörpers 52, wobei sich der Kupplungsstecker 100 bzw. eine anschließende Druckhülse an einer Ringschulterfläche der Endkappe abstützt.

Wird der Handgriff 42 aus seiner Neutralstellung in eine seiner beiden Funktionsstellungen am Ende des Führungsschlitzes 40 geschwenkt, so gelangt z.B. der eine Innenkolben 74 in die Position, die vorher der andere Innenkolben 72 innehatte. Der Kolben 70 gelangt dann auf die linke Seite der Querbohrung 90 und schließt die Ringkammer 78 gegenüber der Rückführbohrung 62 ab. Die zur Steuerleitung 66 führende Querbohrung 86 kommuniziert dann mit der Druckversorgungsleitung 60 über die Querbohrung 82. Die an die Steuerbohrung 66 angeschlossene Schlauchleitung wird dann mit Druckwasser gespeist, das ein in der Ventileinrichtung 20 befindliches Arbeitsventil öffnet, sodaß die Hubplatte 16 z.B. gehoben wird. Läßt der Bediener den Handgriff 42 los, so stellt die Feder 96 den Ventilschieber 50 in seine Mittelstellung zurück, sodaß das Aufwärtsfahren der Hubplatte 16 gestoppt wird.

## Patentansprüche

1. Handsteuergerät zur hydraulischen Fernbetätigung einer Ventileinrichtung (20) von in Badewannen einsetzbaren Liftgeräten (10), wobei das Handsteuergerät (30) mittels eines Bündels Schlauchleitungen (104) an die Ventileinrichtung (20) angeschlossen ist, welches Druckversorgungs-, Rücklauf- und Steuerleitungen umfaßt und das Handsteuergerät (30) ein längliches Gehäuse (32) mit Bodenplatte und zwei stirnseitigen Enden aufweist und an einem Ende des Gehäuses (32) ein, aus einer Neutralstellung in entgegengesetzten Richtungen jeweils in Funktionsstellungen schwenkbarer Handgriff (42) aus dem Gehäuse (32) deckseitig herausragt und am anderen Ende das Bündel (28) Schlauchleitungen (104) angeschlossen ist, **dadurch gekennzeichnet, daß** im Gehäuse (32) ein länglicher bodenparalleler Einsatzkörper (52) angeordnet ist, der eine bodenparallele Zentralbohrung (58) sowie vier parallel zu dieser verlaufende Längsbohrungen (60-66) aufweist, deren eine als Versorgungsbohrung (60) an die Druckwasserleitung, eine weitere als Rückführbohrung (62) an die Rücklaufleitung und deren restliche beiden Längsbohrungen (64, 66) als Steuerbohrungen jeweils an eine der Steuerleitungen angeschlossen sind, daß in der Zentralbohrung (58) ein Ventilschieber (50) mit in Längsabständen an ihm vorgesehenen Kolben (68-74) längsverschiebbar gelagert ist, daß der Handgriff (42) an einem Arm eines aufrechten zweiarmigen Hebels (36) angeordnet ist, dessen unterer Arm sich von einem Hebelschwenklager (38) abwärts erstreckt und mit einem, aus dem Einsatzkörper (52) herausragenden Ende des Ventilschiebers (50) derart gelenkig verbunden ist, daß beim Verschwenken des Handgriffes (42) aus der Neutralstellung heraus der Ventilschieber (50) axial verschoben wird, daß die Kolben (68-74) Dichtringe aufweisen, welche in der Zentralbohrung (58) zwei, durch einen axialen Distanzbereich (80) voneinander distanzierte Ringkammern (76, 78) begrenzen, daß der Ventilschieber (50) in der Neutralstellung des Handhebels (36) eine Mittelstellung einnimmt, in der die Versorgungsbohrung (60) über eine Querbohrung (82) in dem Distanzbereich (80) zwischen den beiden Ringkammern (76, 78) mündet, und beide Ringkammern (76, 78) je über weitere Querbohrungen (88, 90) mit der Rückführbohrung (62) und je einer der Steuerbohrungen (64, 66) kommunizieren, wobei die Steuerleitungs-Querbohrungen (84, 86) an den, dem Distanzbereich (80) zugewandten Enden und die Rückführleitungs-Querbohrungen (88, 90) an den jeweils gegenüberliegenden Enden der Ringkammern (76,78) münden, und daß in jeder der Funktionsstellungen des Handhebels (36) der Ventilschieber (50) soweit aus der Mittelstellung verschoben ist, daß eine Ringkammer (76, 78) die Querbohrung (82) der Versorgungsbohrung (60) und eine der Steuerbohrungen (64, 66) verbindet, die zugehörige Rückführ-Querbohrung (88, 90) jedoch außerhalb dieser Ringkammer (76, 78) liegt.

2. Handsteuergerät nach Anspruch 1, **dadurch gekennzeichnet, daß** das Gehäuse (32) eine umfangsgeschlossene Wand aufweist und der Einsatzkörper (50) stirnseitig in das Gehäuse (32) eingeschoben ist.

3. Handsteuergerät nach Anspruch 1 oder 2, **dadurch gekennzeichnet, daß** in der Zentralbohrung (58) zwei Endkammern (92, 94) gebildet sind, in denen je eine Druckfeder (96, 98) angeordnet ist, welche sich stirnseitig am Einsatzkörper (52) und am Ventilschieber (50) abstützt und daß die Druckfedern (96, 98) den Ventilschieber (50) bei Freigabe des Handhebels (36) in jeder der beiden Funktionsstellungen selbsttätig in seine Mittelstellung verschieben.

4. Handsteuergerät nach einem der Ansprüche 1 bis 3, **dadurch gekennzeichnet, daß** die Längsbohrungen (60-66) als Sacklöcher ausgebildet sind.

5. Handsteuergerät nach einem der Ansprüche 1 bis 4, **dadurch gekennzeichnet, daß** der Einsatzkörper (52) eine stirnseitige ebene Kupplungsfläche aufweist, in der die Längsbohrungen (60-66) rechtwinklig münden, daß ein Kupplungsstecker (100) eine Platte mit von dieser rechtwinklig vorstehenden Hohlzapfen (102) aufweist, denen auf der gegenüberliegenden Plattenseite je ein Schlauchanschlußnippel zugeordnet ist, auf dem eine der Schlauchleitungen (104) befestigt ist, daß die Platte des Kupplungssteckers (100) unter Zwischenlage einer, mit Löchern für die Hohlzapfen (102) versehenen Dichtscheibe (108) an der Kupplungsfläche anliegt, wobei die Hohlzapfen (102) in die Längsbohrungen (60-66) des Einsatzkörpers (52) eingreifen und daß eine Abschlußhülse (106) auf den Einsatzkörper (52) aufgeschraubt ist und mittels einer inneren Ringschulter die Platte des Kupplungssteckers (100) gegen die Kupplungsfläche des Einsatzkörpers (52) drückt.

6. Handsteuergerät nach einem der Ansprüche 1 bis 5, **dadurch gekennzeichnet, daß** der Ventilschieber (50) zwei äußere und zwei innere Kolben (68-74) aufweist, die je mit einem O-Ring bestückt sind und daß die beiden inneren Kolben (72, 74) in der Mittelstellung des Ventilschiebers (50) beidseitig angrenzend an die zur Versorgungsbohrung (60) führende Querbohrung (82) angeordnet sind und einen axialen Abstand aufweisen, der geringer als die axiale Länge der beiden gleich langen Ringkammern (76, 78) ist.

7. Handsteuergerät nach einem der Ansprüche 1 bis 6, **dadurch gekennzeichnet, daß** die äußere Mantelfläche des Einsatzkörpers (52) im wesentlichen kreiszylindrisch ausgebildet ist und in einen entsprechenden zylindrischen Hohlraum des Gehäuses (32) paßt.

8. Handsteuergerät nach Anspruch 7, **dadurch gekennzeichnet, daß** zwischen dem Gehäuse (32) und dem Einsatzkörper (52) an einem dieser Bauteile Längsstege (56) angeformt sind, die in entsprechende Längsnuten (54) des anderen dieser Bauteile formschlüssig eingreifen.

## Claims

1. A manual control unit for the hydraulic remote control of a valve device (20) of bath lifts (10), the manual control unit (30) being connected to the valve device (20) by means of a bunch of sheathed flexible cables (104) which comprises pressure feed lines, return lines and control lines, and the manual control unit (30) having an elongated casing (32) with a bottom plate and two frontal ends, and a handle (42), which is pivotal from a neutral position in opposite directions into positions of operation, projecting topside over the casing (32) at one end of the casing (32), and the bunch 28 of sheathed flexible cables (104) being connected to the other end, **characterized in that** an elongated insert (52) is disposed in the casing (32), the insert (52) being parallel to the bottom and having a central bore (58) parallel to the bottom as well as four lengthwise bores (60-66) parallel thereto, one of which is connected as a supply bore (60) to the pressure conduit, another as a return bore (62) to the return line and the remaining two lengthwise bores (64, 66) of which are connected as control bores each to one of the control lines; in that a valve slide (50) with pistons (68-74) provided on it at longitudinal distances is lodged for lengthwise displacement in the central bore (58); in that the handle (42) is disposed on an arm of an upright two-aimed lever (36), the lower arm of which extends downwards from a lever pivot bearing (38) and is articulated to an end of the valve slide (50) that projects from the insert (52) so that, when the handle (42) is pivoted out of the neutral position, the valve slide (50) is axially displaced; in that the pistons (68-74) have sealing rings which, in the central bore (58), define two annular chambers (76, 78) spaced from each other by an axial space (80); in that the valve slide (50), in the neutral position of the lever (36), takes a central position in which the supply bore (60), via a transverse bore (82), opens into the space (80) between the two annular chambers (76, 78) and both annular chambers (76, 78), each via further transverse bores (88, 90), communicate with the return bore (62) and one of the control bores (64, 66) at a time, the control-line transverse bores (84, 86) leading to the ends of the annular chambers (76, 78) turned toward the space (80) and the return-line transverse bores (88, 90) to the in each case opposite ends; and in that in each position of operation of the lever (36), the valve slide (50) is displaced from the central position sufficiently far for an annular chamber (76, 78) to connect the transverse bore (82) of the supply bore (60) and one of the control bores (64, 66), however for the associated return-line transverse bore (88, 90) to be situated outside this annular chamber (76, 78).

2. A manual control unit according to claim 1, **characterized in that** the casing (32) comprises a circumferentially closed wall and in that the insert (50) is pushed frontally into the casing (32).

3. A manual control unit according to claim 1 or 2, **characterized in that** two end chambers (92, 94) are formed in the central bore (58), in each of which provision is made for a compression spring (96, 98), which supports itself frontally on the insert (52) and on the valve slide (50), and in that, upon release of the manual lever (36) in each of the two positions of operation, the compression springs (96, 98) automatically move the valve slide (50) into its central position.

4. A manual control unit according to one of claims 1 to 3, **characterized in that** the lengthwise bores (60-66) are blind holes.

5. A manual control unit according to one of claims 1 to 4, **characterized in that** the insert (52) comprises a frontal, plane coupling surface, into which the lengthwise bores (60-66) discharge rectangularly; in that a coupler plug (100) comprises a plate with hollow pins (102) rectangularly projecting therefrom and to each of which is allocated a cable joining nipple on the opposite side of the plate, one of the sheathed flexible cables (104) being fixed thereto; in that the plate of the coupler plug (100) bears against the coupling surface with a sealing disk (108) equipped with holes for the hollow pins (102) being placed in between, the hollow pins (102) engaging with the lengthwise bores (60-66) of the insert (52); and in that a terminal sleeve (106) is screwed on the insert (52), by means of an inner annular shoulder forcing the plate of the coupler plug (100) against the coupling surface of the insert (52).

6. A manual control unit according to one of claims 1 to 5, **characterized in that** the valve slide (50) comprises two outer and two inner pistons (68-74), each of which is equipped with an O-ring; and in that in the central position of the valve slide (50), the two inner pistons (72, 74) on both sides adjoin the transverse bore (82) that leads to the supply bore (60) and have an axial distance which is smaller than the axial length of the two annular chambers (76, 78) of identical length.

7. A manual control unit according to one of claims 1 to 6, **characterized in that** the outer generated surface of the insert (52) is substantially annular cylindrical, fitting into a corresponding cylindrical cavity of the casing (32).

8. A manual control unit according to claim 7, **characterized in that** lengthwise ribs (56) are molded between the casing (32) and the insert (52) on one of these components, engaging with corresponding lengthwise grooves (54) of the other of these components.

## Revendications

1. Appareil de commande manuel pour télécommander un dispositif à valves (20) d'appareils élévateurs (10) pouvant être utilisés dans des baignoires, l'appareil de commande manuel (30) étant relié au dispositif à valves (20) par un faisceau de conduites flexibles (104) regroupant des conduites d'alimentation en eau sous pression, de retour et de commande, et l'appareil de commande manuel (30) comprenant un boîtier allongé (32) avec une plaque de fond et deux extrémités frontales, une poignée (42) apte à pivoter d'une position neutre dans des directions opposées vers des positions fonctionnelles sortant par le dessus du boîtier (32) à l'une des extrémités de celui-ci, et le faisceau (28) de conduites flexibles (104) y étant raccordé à l'autre extrémité, caractérisé en ce que, dans le boîtier (32), est disposé un corps inséré allongé (52) qui est parallèle au fond et qui est pourvu d'un trou central (58) parallèle au fond ainsi que de quatre trous longitudinaux (60-66) qui lui sont parallèles et dont un est relié comme trou d'alimentation (60) à la conduite d'eau sous pression, un autre comme trou de reflux (60) à la conduite de retour et chacun des deux autres (64, 66) comme trous de commande à l'une des conduites de commande, qu'une valve coulissante (50) garnie de pistons (68-74) espaces longitudinalement est logée dans le trou central avec la possibilité d'y coulisser longitudinalement, que la poignée (42) est disposée sur l'un des bras d'un levier vertical (36) à deux bras dont le bras inférieur s'étend vers le bas à partir d'un pivot de levier (38) et est relié de manière articulée avec une extrémité de la valve coulissante (50) qui dépasse du corps inséré (52), de façon que la valve coulissante (50) soit déplacée axialement lors du pivotement de la poignée (42) à partir de la position neutre, que les pistons (68-74) comportent des anneaux d'étanchéité qui, dans le trou central (58), délimitent deux chambres annulaires (76, 78) séparées l'une de l'autre par un espace de séparation axial (80), que la valve coulissante (50) adopte, dans la position neutre du levier manuel (36), une position centrale dans laquelle le trou d'alimentation (60) débouche par un trou transversal (82) dans l'espace de séparation (80) entre les deux chambres annulaires (76, 78) et les deux chambres annulaires (76, 78) communiquent chacune par d'autres trous transversaux (88, 90) avec le trou de reflux (62) et avec l'un des trous de commande (64, 66), les trous transversaux de conduites de commande (84, 86) débouchant aux extrémités tournées vers l'espace de séparation (80), et les trous transversaux de conduite de reflux (88, 90) débouchant aux extrémités opposées des chambres annulaires (76, 78), et que, dans chacune des positions fonctionnelles du levier manuel (36), la valve coulissante (50) est suffisamment éloignée de sa position centrale pour qu'une chambre annulaire (76, 78) relie le trou transversal (82) du trou d'alimentation (60) et l'un des trous de commande (64, 66) mais pour que le trou transversal de reflux associé (88, 90) se trouve à l'extérieur de ladite chambre annulaire (76, 78).

2. Appareil de commande manuel selon la revendication 1, caractérisé en ce que le boîtier (32) comporte une paroi à pourtour fermé et le corps inséré (50) est enfilé frontalement dans le boîtier (32).

3. Appareil de commande manuel selon la revendication 1 ou 2, caractérisé en ce que, dans le trou central (58), sont formées deux chambres d'extrémité (92, 94) dans chacune desquelles est disposé un ressort de pression (96, 98) qui prend appui frontalement sur le corps inséré (52) et sur la valve coulissante (50), et en ce que les ressorts de pression (96, 98) ramènent automatiquement la valve coulissante (50) dans sa position centrale lorsque le levier manuel (36) est relâché dans chacune des deux positions fonctionnelles.

4. Appareil de commande manuel selon l'une des revendications 1 à 3, caractérisé en ce que les trous longitudinaux (60-66) sont conformés en trous borgnes.

5. Appareil de commande manuel selon l'une des revendications 1 à 4, caractérisé en ce que le corps inséré (52) comporte une surface d'accouplement frontale plane dans laquelle les trous longitudinaux (60-66) débouchent à angle droit, en ce qu'une fiche d'accouplement (100) comporte une plaque munie de tétons creux (102) qui en partent à angle droit et à chacun desquels est associé, sur le côté opposé de la plaque, un embout de raccordement de flexible auquel est fixée l'une des conduites flexibles (104), en ce que la plaque de la fiche d'accouplement (100) est appliquée contre la surface d'accouplement par l'intermédiaire d'une rondelle d'étanchéité (108) pourvue de trous pour les tétons creux (102), les tétons creux (102) pénétrant dans les trous longitudinaux (60-66) du corps inséré (52), et en ce qu'un manchon fermant (106) est vissé sur le corps inséré (52) et, au moyen d'un épaulement annulaire intérieur, pousse la plaque de la fiche d'accouplement (100) contre la surface d'accouplement du corps inséré (52).

6. Appareil de commande manuel selon l'une des revendications 1 à 5, caractérisé en ce que la valve coulissante (50) comporte deux pistons extérieurs et deux pistons intérieurs (68-74) qui sont garnis chacun d'un joint torique, et en ce que, lorsque la valve coulissante (50) est en position centrale, les deux pistons intérieurs (72, 74) sont disposés de part et d'autre, de manière adjacente, du trou transversal (82) menant au trou d'alimentation (60) et présentent un écartement axial qui est inférieur à la longueur axiale des deux chambres annulaires de même longueur (76, 78).

7. Appareil de commande manuel selon l'une des revendications 1 à 6, caractérisé en ce que la surface périphérique extérieure du corps inséré (52) est de forme sensiblement cylindro-circulaire et s'adapte dans une cavité cylindrique correspondante du boîtier (32).

8. Appareil de commande manuel selon la revendication 7, caractérisé en ce que, entre le boîtier (32) et le corps inséré (52), sont surmoulées, sur l'un desdits composants, des nervures longitudinales (56) qui pénètrent par complémentarité de formes dans des rainures longitudinales correspondantes (54) de l'autre desdits composants.
